# EUROPÄISCHE PATENTANMELDUNG

(11) **EP 3 588 365 A1**
(43) Veröffentlichungstag der Anmeldung: **01.01.2020**
(21) Anmeldenummer: 18179639.2
(22) Anmeldetag: 25.06.2018
(51) Int. Cl.: G06K 9/00, G06K 9/03, G06K 9/62

(54) **OPTOELEKTRONISCHER SENSOR UND VERFAHREN ZUM SICHEREN AUSWERTEN VON MESSDATEN**

(71) Anmelder: Sick AG, 79183 Waldkirch (DE)
(72) Erfinder: Braune, Ingolf, 79194 Gundelfingen (DE); Neubauer, Dr. Matthias, 79102 Freiburg (DE); Müller, Lars, 79108 Freiburg (DE)

(57) **Zusammenfassung**

Es wird ein optoelektronischer Sensor (10) zur Erfassung von Objekten (28) in einem Überwachungsbereich (12) mit mindestens einem Lichtempfänger (16a-b) zur Erzeugung von Messdaten aus Empfangslicht aus dem Überwachungsbereich (12) sowie mit einer sichere Auswertungseinheit (24) angegeben, die mindestens zwei Verarbeitungskanälen (30a-b) zur redundanten Verarbeitung der Messdaten und einer Vergleichseinheit (44a-b) zum Vergleichen von Verarbeitungsergebnissen der Verarbeitungskanäle (30a-b) aufweist, um Fehler in einem Verarbeitungskanal (30a-b) aufzudecken. Dabei sind die Verarbeitungskanäle (30a-b) jeweils für eine Bestimmung einer Signatur (40a-b₁..₃) zu ihren Verarbeitungsergebnissen und die Vergleichseinheit (44a-b) für einen Vergleich der Signaturen (40a-b₁..₃) ausgebildet.

## Beschreibung

Die Erfindung betrifft einen optoelektronischen Sensor zur Erfassung von Objekten in einem Überwachungsbereich und ein Verfahren zum sicheren Auswerten von Messdaten nach dem Oberbegriff von Anspruch 1 beziehungsweise 15.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sensoren überwacht, und wenn demnach eine Situation vorliegt, in der eine Person gefährlich nahe an die Maschine zu gelangen droht, wird eine geeignete Absicherungsmaßnahme ergriffen.

Für die Überwachung werden unter anderem 3D-Sensoren eingesetzt. Dazu zählen zunächst 3D-Kameras in unterschiedlichen Technologien, beispielsweise Stereoskopie, Triangulation, Lichtlaufzeit oder Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind in zwei oder allen drei Richtungen abtastende Laserscanner, die über die jeweiligen Abtastwinkel und die gemessene Entfernung ebenfalls dreidimensionale Bilddaten erfassen. Der im Vergleich zu einer zweidimensionalen Bilderfassung höhere Geräte- und Auswertungsaufwand zur Erzeugung von dreidimensionalen Bilddaten wird in vielen Anwendungen durch die Zusatzinformationen gerechtfertigt.

In der Sicherheitstechnik beziehungsweise für den Personenschutz eingesetzte Sensoren müssen besonders zuverlässig arbeiten und deshalb hohe Sicherheitsanforderungen erfüllen, beispielsweise die Norm EN ISO 13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie Funktionstests, sichere Auswertung oder eine Überwachung der Verschmutzung optischer Bauteile.

Eine in der Sicherheitstechnik häufig genutzte Maßnahme, die teilweise von den Normen auch gefordert ist, sieht ein mehrkanaliges System zur Datenverarbeitung vor. Die Kanäle verarbeiten die Daten redundant parallel und sollen zu identischen Ergebnissen in der Verarbeitung kommen. Ist das nicht der Fall, so liegt das in der Regel an einem Hardwarefehler, der auf diese Weise erkannt wird. Bei Strukturen mit mehr als zwei Kanälen ist auch ein Mehrheitsentscheid (Voting) möglich.

Bei kleinen Datenmengen ist ein direkter Vergleich von Daten, Testergebnissen oder Zwischenergebnissen zwischen den Kanälen möglich. Bei großen Datenmengen, wie im Falle von Bildern, ist ein hoher Aufwand beim Transport der Daten von einem zum anderen Kanal und auch für den Vergleich der Daten notwendig, was eine hohe Belastung der Systemressourcen bedeutet. Der Vergleich muss sogar kreuzweise erfolgen, d. h. in jedem Kanal für sich.

Die Safety-Norm IEC 61508 "Functional Safety of Electrical/Electronic/Programmable Electronic Safety-related Systems (E/E/PE, or E/E/PES) beziehungsweise die Norm über sicherheitsgerichtete Feldbusprotokolle IEC 61158, "Industrial communication networks - Fieldbus specifications - Part 1: Overview and guidance for the IEC 61158 and IEC 61784 series" führen den Begriff eines sogenannten "Black Channel" ein. Das ist kein Verarbeitungskanal, sondern ein Kommunikationskanal für die Kommunikation von Gerät zu Gerät. Die Kommunikation über einen Black Channel wird als nicht fehlersicher angesehen, es müssen also andere Maßnahmen ergriffen werden, um die Integrität der übertragenen Daten abzusichern und Fehler aufzudecken.

Die DE 102 24 031 B3 offenbart eine Vorrichtung zur Überwachung eines Erfassungsbereichs an einem Arbeitsmittel. Dabei wird die Szenerie mit Hilfe eines Strahlteilers auf zwei Kameras abgebildet, die jeweils eigene Rechnereinheiten aufweisen und zur gegenseitigen Überprüfung miteinander gekoppelt sind. Der Datenaustausch zwischen den Rechnereinheiten zu deren gegenseitiger Funktionskontrolle erfolgt auf Ebene von Bildmerkmalen, anhand derer ein Objekt erfassbar und klassifizierbar ist. Je nachdem, wie gut solche Bildmerkmale die vollständigen Bilddaten repräsentieren, ist ein solcher Vergleich entweder unvollständig und übersieht Fehler, oder es müssen so viele Bildmerkmale übertragen werden, dass die Komplexität der Kommunikation und des Vergleichs praktisch einer Überprüfung der gesamten Bilddaten entspricht.

Die DE 10 2004 031 678 A1 offenbart eine Verarbeitung von Überwachungsdaten, die von einem Sensor bereitgestellt werden, wobei der Datenfluss zwischen Sensor und Entscheidungsfindung über wenigstens zwei logische Verarbeitungskanäle geleitet wird. Dabei können Ergebnisse oder Zwischenergebnisse der Verarbeitungskanäle miteinander verglichen werden, und folglich besteht in dieser zweikanaligen Architektur das Problem des großen Aufwandes für den Vergleich großer Datenmengen weiter.

Aus der DE 10 2013 214 398 A1 ist eine Überwachung von redundanten Komponenten bekannt. An zwei Prozessorkernen werden Profile aus einem Eingangssignal ermittelt und die Profile miteinander verglichen. Das ist also ein weiteres Beispiel einer herkömmlichen zweikanaligen Struktur mit Vergleich der vollständigen Verarbeitungsergebnisse.

In der DE 10 2007 009 141 B4 werden dem Datenstrom in einer mehrstufigen Verarbeitung jeweils Testdaten hinzugefügt, und hinter der jeweiligen Verarbeitungsstufe wird geprüft, ob diese Testdaten mit einem Sollergebnis übereinstimmen. Auf diese Weise wird eine sichere Verarbeitung auch mit nur einem Auswertungskanal erreicht. Die Frage, wie große Datenmengen zwischen zwei Kanälen geprüft werden können, stellt sich daher gar nicht.

Es ist daher Aufgabe der Erfindung, eine sichere, mehrkanalige Auswertung zu verbessern.

Diese Aufgabe wird durch einen optoelektronischen Sensor zur Erfassung von Objekten in einem Überwachungsbereich und ein Verfahren zum sicheren Auswerten von Messdaten nach Anspruch 1 beziehungsweise 15 gelöst. Ein Lichtempfänger erzeugt Messdaten aus Empfangslicht. Die Messdaten werden in einer Auswertungseinheit verarbeitet, die im Sinne der einleitend genannten oder vergleichbarer Normen sicher ist. Dazu ist eine mehrkanalige Struktur der Auswertungseinheit mit mindestens zwei Verarbeitungskanälen vorgesehen, welche die Messdaten redundant auswerten. Ein Verarbeitungskanal ist ein Funktionsblock innerhalb der Auswertungseinheit, der Messdaten verarbeitet, wobei jeder Verarbeitungskanal eigene Hardwarebausteine aufweisen kann, aber nicht muss. Fehler in den Verarbeitungskanälen werden in einer Vergleichseinheit durch einen Vergleich der Verarbeitungsergebnisse zwischen den Kanälen aufgedeckt, die bei fehlerfreier Funktion aufgrund der Redundanz übereinstimmen sollten. Die Vergleichseinheit ist ebenfalls ein Funktionsblock der Auswertungseinheit und vorzugsweise für einen Kreuzvergleich in jedem Verarbeitungskanal redundant vorgesehen.

Die Erfindung geht nun von dem Grundgedanken aus, dass für eine Überprüfung der Integrität der Verarbeitungskanäle nicht die gesamten Daten der Verarbeitungsergebnisse verglichen werden müssen, sondern wenige Kennwerte genügen, welche die Information repräsentieren. Daher werden erfindungsgemäß Signaturen der Verarbeitungsergebnisse bestimmt und nur die Signaturen verglichen. Die Signatur allerdings wird vorzugsweise aus den gesamten Daten der jeweiligen Verarbeitungsergebnisse bestimmt, so dass sich eine andere Signatur ergibt, wenn sich die Verarbeitungsergebnisse an irgendeiner Stelle unterscheiden. Es kann sein, dass Verarbeitungsergebnisse nur teilweise sicherheitsrelevant sind. Beispielsweise sind Bilddaten in einem Randbereich fern einer abzusichernden Gefahr möglicherweise irrelevant. Dann kann sich die Signatur auf den sicherheitsrelevanten Teil der Daten beschränken.

Die Erfindung hat den Vorteil, dass durch eine radikale Datenreduktion der Kommunikations- und Vergleichsaufwand zur gegenseitigen Prüfung von Verarbeitungsergebnissen minimiert wird. So kann eine Fehlererkennung effizient ausgeführt werden, ohne die Systemressourcen in unnötiger Weise zu belasten. Dementsprechend reduziert sich der Hardware- und Schaltungsaufwand. Die funktionale Sicherheit und eine hohe Verfügbarkeit bleiben gewahrt.

Der Sensor ist bevorzugt eine Kamera mit mindestens einem Bildsensor als Lichtempfänger, der Bilddaten als Messdaten erzeugt. Obwohl das erfindungsgemäße Sicherheitskonzept darauf nicht beschränkt ist, zeigt es seine Vorteile vor allem bei großen Datenmengen, wie dies typischerweise bei den Bilddaten einer Kamera der Fall ist. Insbesondere gilt das für eine 3D-Kamera, bei der Datenmengen und Komplexität der Verarbeitung gegenüber einer herkömmlichen 2D-Kamera noch weiter ansteigen. Eine 3D-Kamera kann zunächst jede bekannte Technik verwenden, wie ein Lichtlaufzeitprinzip mit direkter Laufzeitmessung von Lichtsignalen oder Phasenmessung oder eine Entfernungsschätzung aus Helligkeiten oder Fokuslagen (DFF, Depth from Focus, DFD, Depth from Defocus). Besonders bevorzugt nutzt die 3D-Kamera aber ein Triangulationsprinzip, bei dem zwei Kamerabilder einer bewegten Kamera oder einer Stereokamera untereinander korreliert werden, oder alternativ ein Beleuchtungsmuster mit einem Kamerabild korreliert wird, um so Disparitäten zu schätzen und daraus Abstände zu bestimmen. Auch ein Laserscanner erzeugt praktisch dreidimensionale Bilddaten durch seine periodische Abtastung. Bei einem klassischen Laserscanner sind diese Bilddaten auf eine Abtastebene beschränkt, aber durch in Elevation bewegte Abtastung oder mehrere in Elevation versetzte Abtaststrahlen entfällt diese Beschränkung auch für Laserscanner.

Bei einer bevorzugten Ausführungsform als Stereokamera weisen die Verarbeitungskanäle zumindest einige der folgenden Verarbeitungsstufen auf: Auslesen von Rohbildern, Vorverarbeitung von Rohbildern, Erzeugung einer Tiefenkarte durch einen Stereoskopiealgorithmus, Erzeugung einer Detektionskarte mit relevanten erfassten Objekten, Bestimmen kürzester Abstände der relevanten Objekte zu Gefahrenstellen und Ableiten einer sicherheitsgerichteten Reaktion aus den kürzesten Abständen. Relevante Objekte sind insbesondere solche, die eine Mindestgröße aufweisen oder nach Filtern mit einem Körpermodell noch als zu detektierendes Körperteil in Frage kommen. An dem Beispiel einer Stereokamera wird ein komplexer Verarbeitungsfluss der ursprünglichen Messdaten oder Rohbilder veranschaulicht. Die Verarbeitungspipeline kann eine Vorverarbeitung mit Glätten, Helligkeitsanpassung und vergleichbaren Filtern, die eigentliche 3D-Bilderzeugung durch einen Stereoskopiealgorithmus, die Objekterkennung, die Erfassung sicherheitsrelevanter Objekteigenschaften und schließlich die Sicherheitsbewertung umfassen. Dabei fallen in den einzelnen Verarbeitungsstufen große Datenmengen an, welche die Mengen der schon umfangreichen ursprünglichen Messdaten sogar noch übertreffen. Die erfindungsgemäße Überprüfung mit Hilfe von Signaturen ist daher besonders vorteilhaft.

Die Signatur weist bevorzugt einen aus den Verarbeitungsergebnissen berechneten Hashwert auf. Über die verwendete Hashfunktion sind sich die Verarbeitungskanäle einig. Eine Hashfunktion ist sehr effizient in der Lage, auch aus großen Mengen von Eingangsdaten einen Hashwert zu berechnen, welcher die Eingangsdaten repräsentiert. Das bedeutet, dass sich ein anderer Hashwert ergibt, wenn die Eingangsdaten an irgendeiner Stelle verändert sind. Der Vergleich von Hashwerten deckt also Fehler zuverlässig auf. Insbesondere wird als Hashfunktion eine zyklische Redundanzprüfung (CRC, Cyclic Redundany Check) verwendet. Das ist effizient berechenbar und erfüllt die Sicherheitsanforderungen.

Die Verarbeitungskanäle weisen bevorzugt jeweils mehrere Verarbeitungsstufen auf und sind dafür ausgebildet, in mehreren, insbesondere allen Verarbeitungsstufen, eine Signatur für die Verarbeitungsergebnisse dieser Verarbeitungsstufe zu bestimmen. Auf den ersten Blick scheint es vorstellbar, die Signatur erst für Verarbeitungsergebnisse der letzten Verarbeitungsstufe zu bestimmen. Das wäre aber nicht sicher, weil Mehrfachfehler in den vorausgegangenen Verarbeitungsstufen übersehen würden. Das gilt in besonderem Maße, wenn die letzte Verarbeitungsstufe nur noch ein vergleichsweise einfaches Ergebnis enthält, im Extremfall eine binäre Information, ob ein sicherheitsrelevantes Objekt erfasst wurde oder nicht. Durch Kaskadierung von Signaturen werden auch Zwischenfehler erkannt.

Die Verarbeitungskanäle sind bevorzugt dafür ausgebildet, Signaturen aus verschiedenen Verarbeitungsstufen zu sammeln, insbesondere eine Signatur für jede Verarbeitungsstufe. Es entsteht also eine Art Feld aus Signaturen entsprechend der Anzahl von Verarbeitungsstufen. Damit werden nicht nur Fehler und Zwischenfehler verlässlich aufgedeckt, sondern es wird auch noch eine für die Diagnose sehr hilfreiche Information erfasst, auf welcher Verarbeitungsstufe ein Fehler aufgetreten ist.

Die Verarbeitungskanäle sind bevorzugt dafür ausgebildet, Signaturen jeweils an die nächste Verarbeitungsstufe weiterzugeben. Die Signaturen werden damit zu einem Teil des Datenflusses. Alternativ weisen die Verarbeitungskanäle einen Signaturspeicher auf, in dem die Verarbeitungsstufen ihre jeweiligen Signaturen ablegen. In einer Mischform werden Signaturen über einige Verarbeitungsstufen weitergebeben, während andere Verarbeitungsstufen ihre Signaturen in einem Signaturspeicher des Verarbeitungskanals ablegen.

In einer bevorzugten Ausführungsform sind Verarbeitungskanäle dafür ausgebildet, in mindestens einer Verarbeitungsstufe die Signatur über die Verarbeitungsergebnisse der Verarbeitungsstufe und eine Signatur aus einer vorangegangenen Verarbeitungsstufe zu bestimmen. In dieser Ausführungsform werden Signaturen nicht gesammelt oder aneinandergehängt, sondern stattdessen wird die Signatur der vorausgegangenen Verarbeitungsstufen als Teil der Daten aufgefasst, und die neue Signatur einer Verarbeitungsstufe repräsentiert als eine Art Metasignatur auch die vorangegangene Signatur. Wenn alle Verarbeitungsstufen so ausgebildet sind, muss am Ende nur eine einzige Signatur verglichen werden, welche die Integrität der Verarbeitungsergebnisse aller Verarbeitungsstufen sicherstellt. Allerdings ist nun im Gegensatz zu Ausführungsformen, in denen einzelne Signaturen der Verarbeitungsstufen gesammelt werden, nicht mehr bekannt, an welcher Stelle erstmals ein Fehler auftrat. Erneut sind Mischformen denkbar, in denen einige Verarbeitungsstufen ihre Signaturen sammeln und andere eine neue Signatur unter Einschluss der früheren Signatur oder Signaturen bestimmen.

Die Verarbeitungskanäle weisen bevorzugt Verarbeitungsstufen auf verschiedenen Bauteilen auf. Die Verarbeitungsstufen sind also nicht ausschließlich Funktionsblöcke auf demselben Hardwarebaustein, sondern über eine Kaskade von mindestens zwei Bauteilen verteilt, etwa einem FPGA (Field Programmable Gate Array) und einem Mikroprozessor. Es bleibt aber möglich, dass mehrere der Verarbeitungsstufen auf demselben Bauteil und erst nachfolgende Verarbeitungsstufen auf einem anderen Bauteil implementiert sind.

Die Verarbeitungskanäle sind bevorzugt dafür ausgebildet, Verarbeitungsergebnisse und/oder Signaturen zwischen den Verarbeitungsstufen über eine nicht sichere Kommunikationsverbindung weiterzugeben. Mit einer nicht sicheren Kommunikationsverbindung ist insbesondere ein Black Channel gemeint, der einleitend erwähnt wurde. Es handelt sich also um eine Standardkommunikation, die keine fehlersichere Übertragung im Sinne der einleitend genannten Normen garantiert. Die Erfindung kommt mit Black Channels aus, weil Übertragungsfehler ebenso durch den Signaturvergleich aufgedeckt würden wie andere Fehler. Die Kommunikation über Black Channels wird herkömmlich nur von Gerät zu Gerät über Standardschnittstellen genutzt. Hier werden jedoch die Vorteile der kosteneffizienten Verwendung von Standardtechnologien und einfacheren Hardwareauslegung im Geräteinneren genutzt.

Die Vergleichseinheit ist bevorzugt dafür ausgebildet, nur am Ende der Verarbeitungskanäle Signaturen zu vergleichen. Es ist dadurch nur eine zentrale Vergleichseinheit erforderlich, die nur einmalig je Verarbeitungskanal vorhanden sein und überwacht werden muss. Entsprechend ist auch nur an einer Stelle eine Kommunikation zwischen den Verarbeitungskanälen für die Übertragung von Signaturen erforderlich. Das reduziert den Hardware- und Auswertungsaufwand erheblich. Verglichen werden je nach Ausführungsform die durch jeweilige kaskadierte Weitergabe oder zentral gesammelten Signaturen der einzelnen Verarbeitungsstufen oder die Signatur der letzten Verarbeitungsstufe, die als eine Art Metasignatur auch die Signaturen vorangehender Verarbeitungsstufen repräsentiert. Alternativ zu einem zentralen Vergleich am Ende der Verarbeitungskanäle ist auch mindestens ein Zwischenvergleich bei einer früheren Verarbeitungsstufe denkbar.

Die Auswertungseinheit ist bevorzugt dafür ausgebildet, Signaturen über eine nicht sichere Kommunikationsverbindung, insbesondere einen Black Channel, an die Vergleichseinheit weiterzugeben. Oben wurde schon eine Ausführungsform erläutert, die nicht sichere Kommunikationsverbindungen oder Black Channels für den Datenfluss von Verarbeitungsstufe zu Verarbeitungsstufe innerhalb eines Verarbeitungskanals nutzt. Hier wird ein vergleichbares Konzept mit vergleichbaren Vorteilen für die Kommunikation zwischen den Verarbeitungskanälen genutzt. Eine nicht sichere Kommunikationsverbindung reduziert deutlich den Aufwand, und Übertragungsfehler würden durch zusätzliche Signaturen und deren Vergleiche in der Realisierung des Übertragungskanals aufgedeckt.

Die Verarbeitungskanäle sind bevorzugt dafür ausgebildet, Testdaten in die Messdaten oder Verarbeitungsergebnisse einzuschleusen. Solche Testdaten werden in der jeweiligen Verarbeitungsstufe mit verarbeitet, und es ist bekannt, welches Verarbeitungsergebnis bei fehlerfreier Auswertung resultierten muss. Testdaten ermöglichen, ganz gezielt auf bestimmte Fehler in der Verarbeitung zu testen beziehungsweise Fehler zu provozieren. Ein Beispiel für Testdaten ist, in Bilddaten die Bildzeilen zu verlängern oder Bildzeilen anzuhängen. Alternativ können auch ganze Testbilder verarbeitet werden, die dann vorzugsweise hoch und schmal beziehungsweise niedrig und breit sind, um mit kleinen Testbildern und damit kleinen Datenmengen trotzdem die gesamte notwendige Höhe und Breite abzudecken.

Die Verarbeitungskanäle sind bevorzugt dafür ausgebildet, die Signatur auch über Verarbeitungsergebnisse der Testdaten zu bestimmen. So müssen nicht die gesamten Verarbeitungsergebnisse der Testdaten verglichen werden, sondern sie werden in der Signatur mit berücksichtigt. Insbesondere kann eine separate Testdatensignatur für den Testdatenbereich bestimmt und geprüft werden. Es ist bekannt, welches Verarbeitungsergebnis die Testdaten liefern sollten, und entsprechend ist auch eine erwartete Testdatensignatur bekannt.

Die Verarbeitungskanäle sind bevorzugt dafür ausgebildet, Daten und/oder Signaturen mit einer Fehlerkorrekturmöglichkeit für die Übertragung zu versehen. Entsprechend ist die jeweilige nächste Verarbeitungsstufe vorzugsweise für die entsprechende Fehlerkorrektur ausgebildet, beziehungsweise für die letzte Verarbeitungsstufe möglicherweise auch die Vergleichseinheit. Durch an sich bekannte Fehlerkorrekturmechanismen wird die Verfügbarkeit erhöht, da zumindest einige Fehler ausgeglichen werden. Das betrifft vor allem Übertragungsfehler in den Black Channels. Es ist in aller Regel nicht zulässig, durch Fehlerkorrekturmechanismen unterschiedliche Verarbeitungsergebnisse in den Verarbeitungskanälen auszugleichen, weil dadurch Hardwarefehler überdeckt und möglicherweise sicherheitsrelevante Situationen übersehen werden könnten.

Die Verarbeitungskanäle sind bevorzugt dafür ausgebildet, nicht mehr benötigte Teile der Verarbeitungsergebnisse zu löschen. Die Signaturen enthalten sämtliche für einen Vergleich relevanten Informationen, so dass für die eigentliche Auswertung nicht mehr benötigte Zwischenergebnisse auch für den abschließenden Vergleich zwischen den Kanälen nicht mehr erforderlich sind. Das wäre bei einer herkömmlichen zweikanaligen Struktur anders, weil dann Fehler übersehen werden könnten, die sich im Endergebnis zufällig kompensiert haben.

Die Auswertungseinheit weist bevorzugt mehr als zwei Verarbeitungskanäle auf, und die Vergleichseinheit ist für ein Voting-Verfahren zum Bewerten von Signaturen ausgebildet. Durch mehrfache Redundanz können Sicherheit und/oder Verfügbarkeit erhöht werden. Vorzugsweise wird nicht verlangt, dass alle Verarbeitungskanäle identische Signaturen liefern, obwohl diese strenge Forderung denkbar wäre. Vielmehr wird mit einem Voting anhand eines Vergleichs der Signaturen festgestellt, ob zumindest noch eine ausreichende Mehrheit der Verarbeitungskanäle übereinstimmende Auswertungen vornimmt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Darstellung einer 3D-Kamera und ihres Überwachungsbereichs;
- Fig. 2: eine beispielhafte Überwachungssituation mit mehreren Gefahrenstellen und Objekten;
- Fig. 3: eine schematische Darstellung einer zweikanaligen Auswertungseinheit;
- Fig. 4: eine schematische Darstellung eines mehrstufigen Verarbeitungskanals mit Erzeugung von kaskadierten Signaturen;
- Fig. 5: eine schematische Darstellung eines mehrstufigen Verarbeitungskanals ähnlich Figur 4, bei dem jedoch die Signaturen der Verarbeitungsstufen zentral gesammelt werden;
- Fig. 6: eine schematische Darstellung einer zweikanaligen Auswertungseinheit mit mehrstufigen Verarbeitungskanälen und einmaligem Vergleich am Ende der Verarbeitung; und
- Fig .7a-b: schematische Darstellungen des Anfügens von Testdaten durch Verlängern von Bildzeilen beziehungsweise Anhängen von Bildzeilen.

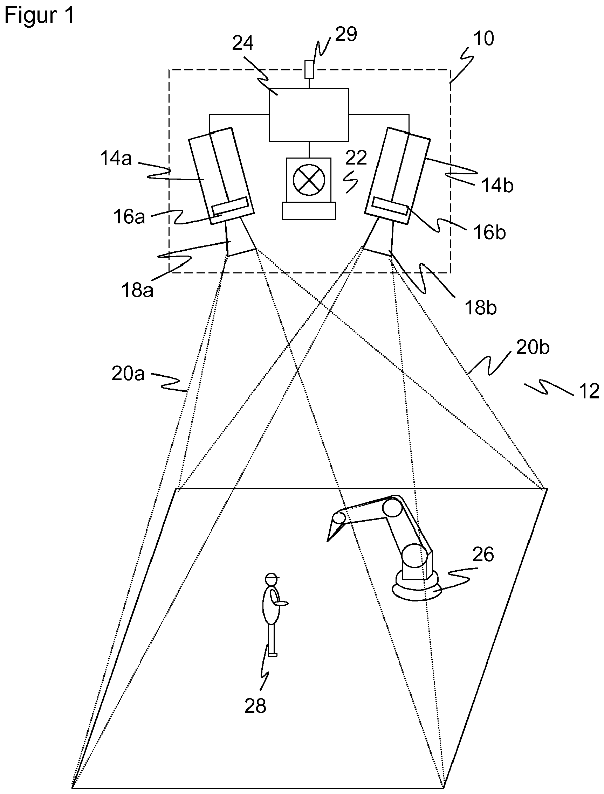

Figur 1 zeigt in einer schematischen dreidimensionalen Darstellung den allgemeinen Aufbau einer Stereokamera 10 zur Aufnahme einer Tiefenkarte. Die Stereokamera 10 dient nur als ein Beispiel für einen erfindungsgemäßen Sensor, der regelmäßig besonders große Datenmengen erzeugt und daher die Vorteile der Erfindung in besonderem Maße verdeutlicht. Ebenso denkbar wären andere optoelektronische Sensoren, unter anderem die einleitend genannten anderen 3D-Kameras mit Bestimmung der Lichtlaufzeit oder einer Auswertung der Störung passiver zweidimensionaler Muster oder mit Korrelation von Bild und projizierten Beleuchtungsmustern sowie Laserscanner.

Zur Erfassung eines Raumbereichs 12 sind zwei Kameramodule 14a, 14b in einem bekannten festen Abstand zueinander montiert und nehmen jeweils Bilder des Raumbereichs 12 auf. In jeder Kamera ist ein Bildsensor 16a, 16b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 16a, 16b ist je ein Objektiv 18a, 18b mit einer abbildenden Optik zugeordnet, welche in der Praxis als jedes bekannte Abbildungsobjektiv realisiert sein können. Der maximale Sichtwinkel dieser Optiken ist in Figur 1 durch gestrichelte Linien dargestellt, die jeweils eine Sichtpyramide 20a, 20b bilden.

Zwischen den beiden Bildsensoren 16a, 16b ist eine Beleuchtungseinheit 22 vorgesehen, um den Raumbereich 12 mit einem strukturierten Muster auszuleuchten. Die dargestellte Stereokamera ist demnach für aktive Stereoskopie ausgebildet, bei der das Muster auch einer an sich strukturlosen Szenerie überall auswertbare Kontraste aufprägt. Alternativ ist keine oder eine homogene Beleuchtung vorgesehen, um die natürlichen Objektstrukturen im Raumbereich 12 auszuwerten, was aber regelmäßig zu zusätzlichen Bildfehlern führt.

Mit den beiden Bildsensoren 16a, 16b und der Beleuchtungseinheit 22 ist eine Steuer- und Auswertungseinheit 24 verbunden. Die Steuer- und Auswertungseinheit 24 kann in verschiedenster Hardware implementiert sein, beispielsweise digitalen Bausteinen wie Mikroprozessoren, ASICs (Application Specific Integrated Circuit), FPGAs (Field Programmable Gate Array), GPUs (Graphics Processing Unit) oder Mischformen davon, die beliebig auf interne und externe Komponenten verteilbar sind, wobei externe Komponenten auch über Netzwerk oder eine Cloud eingebunden sein können, soweit Latenzen beherrscht oder toleriert werden können. Da das Erzeugen der Tiefenkarte und deren Auswertung sehr rechenintensiv sind, wird vorzugsweise eine zumindest teilweise parallele Architektur gebildet.

Die Steuer- und Auswertungseinheit 24 erzeugt mit Hilfe der Beleuchtungseinheit 22 das strukturierte Beleuchtungsmuster und empfängt Bilddaten der Bildsensoren 16a, 16b. Aus diesen Bilddaten berechnet sie mit Hilfe einer stereoskopischen Disparitätsschätzung die 3D-Bilddaten beziehungsweise die Tiefenkarte des Raumbereichs 12. Der gesamte erfassbare Raumbereich 12 oder auch Arbeitsbereich kann über eine Konfiguration eingeschränkt werden, beispielsweise um störende oder nicht notwendige Bereiche auszublenden.

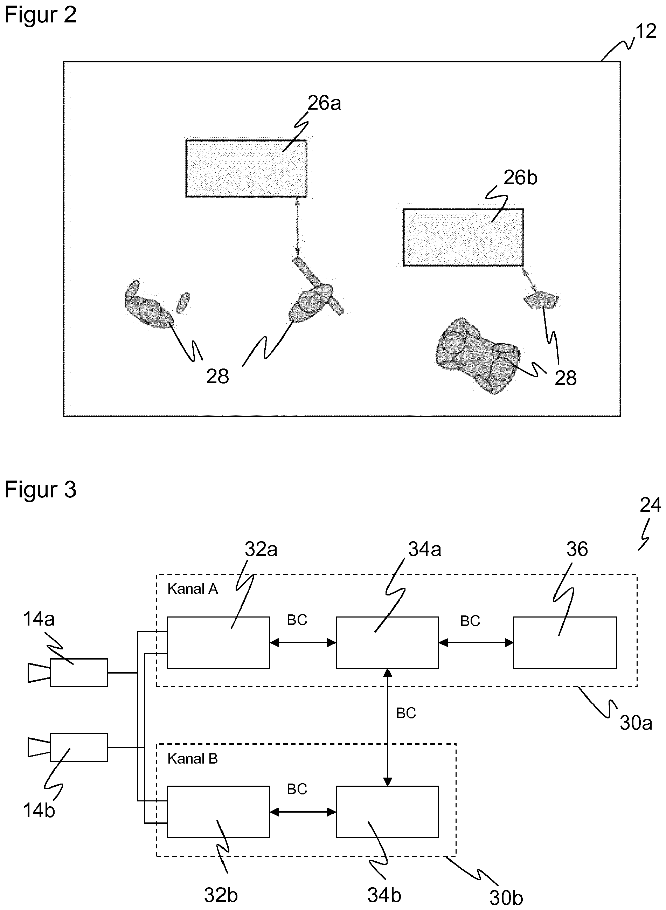

Eine wichtige sicherheitstechnische Anwendung der Stereokamera 10 ist die Überwachung einer Maschine 26, die in der Figur 1 durch einen Roboter symbolisiert ist. Die Maschine 26 kann auch wesentlich komplexer sein als gezeigt, aus vielen Teilen bestehen oder sogar eigentlich eine Anordnung mehrerer Maschinen sein, etwa mehrerer Roboter oder Roboterarme. Die Steuer- und Auswertungseinheit 24 prüft, wo sich ein Objekt 28, dargestellt als Person, in Bezug auf die Maschine 26 befindet. Über eine sichere Schnittstelle 29 wird ein kleinster Abstand eines Objekts 28 zu der Maschine 26 ausgegeben, entweder direkt an die Maschine 26 oder an eine Zwischenstation wie eine sichere Steuerung. Die Stereokamera 10 ist vorzugsweise insgesamt fehlersicher im Sinne von Sicherheitsnormen wie den einleitend genannten ausgelegt. Die Auswertung in der Steuer- und Auswertungseinheit 24 ist durch eine besondere Mehrkanalstruktur sicher, die später unter Bezugnahme auf die Figuren 3 bis 7 genauer erläutert wird.

Eine an die sichere Schnittstelle 29 angeschlossene Steuerung, sei es eine übergeordnete Steuerung oder diejenige der Maschine 26, wertet den kürzesten Abstand aus. Im Gefährdungsfall wird eine sicherheitsgerichtete Reaktion eingeleitet, um beispielsweise die Maschine 26 anzuhalten, abzubremsen oder ausweichen zu lassen. Ob dies erforderlich ist, kann neben dem kürzesten Abstand von weiteren Bedingungen wie den Geschwindigkeiten oder der Beschaffenheit von Objekt 28 und dem Maschinenbereich 26 der drohenden Kollision abhängen. Die Sicherheitsbewertung kann alternativ in der Steuer- und Auswertungseinheit 24 erfolgen und auch auf anderen Kriterien beruhen als einem kürzesten Abstand.

Etwas detaillierter beschrieben wird aber nur stellvertretend eine Abstandsüberwachung beispielsweise für eine Mensch-Roboter-Kollaboration unter Berücksichtigung von DIN EN ISO 10218 beziehungsweise ISO/TS 15066. Ausgangspunkt sind die Positionen der Maschinenteile der Maschine 26, jedenfalls soweit diese sicherheitsrelevant sind, beziehungsweise auf dieser Basis definierte Gefahrenstellen, die gegebenenfalls anhand von Reaktions- und Anhaltezeit oder anderen Kriterien erweitert sind, sowie die von der Stereokamera 10 erfassten Objekte 28. Letzteres liegt beispielsweise in Form einer 2D-Detektionskarte vor, deren Pixel an Positionen, in denen ein Objekt 28 einer Mindestgröße erfasst wurde, der dazu gemessene Entfernungswert eingetragen ist, und die sonst leer bleibt. Mit Hilfe dieser Objektdetektionen, die natürlich auch anders repräsentiert sein können, werden der jeweilige und insbesondere der kürzeste Abstand zu der Maschine 26 berechnet, die eine vorzugsweise auch dynamische Gefahrenstelle bildet. Abhängig von dem Abstand erfolgt dann gegebenenfalls durch eine an der sicheren Schnittstelle 29 angeschlossene Steuerung eine Absicherung, die wie mehrfach erwähnt auch in einem Ausweichen oder Verlangsamen bestehen kann.

Figur 2 zeigt eine beispielhafte Überwachungssituation in dem Überwachungsbereich 12. Die Absicherungsaufgabe auf Basis der Stereokamera 10 besteht darin, die Anwesenheit von Menschen, hier einfach definiert als Objekte 28 einer bestimmten Mindestgröße, zu erkennen und abhängig von deren Position und gegebenenfalls weiterer Größen sowie dem aktuellen Maschinenzustand sicherheitsgerichtet eine definierte Reaktion einzuleiten, so dass jederzeit die Sicherheit der Menschen gewährleistet ist.

In diesem Beispiel sind zwei Gefahrenstellen 26a-b zu überwachen, also Maschinenbereiche oder Maschinen, und derzeit sind von der Stereokamera 10 in deren Umgebung vier Objekte 28 erkannt. Die Stereokamera 10 liefert Abstandsdaten, damit eine angeschlossene Steuerung durch reduzierte Geschwindigkeit, ein ausweichendes Umplanen der Abläufe oder notfalls rechtzeitigen Stopp der Maschinen in den Gefahrenstellen 26a-b die Personen vor Verletzungen schützt.

Eine Gefahrenstelle 26a-b ist eine bevorzugte Modellierung der gefahrbringenden Maschine 26. Die Gefahrenstelle 26a-b ist ein Raumbereich, in dem die Maschine 26 in einem jeweiligen Zeitabschnitt Arbeitsbewegungen ausführt. Die Gefahrenstelle 26a-b kann die Maschine 26 oder Teilbereiche der Maschine mit etwas Abstand umgeben, um den Arbeitsbewegungen ausreichend Spiel zu lassen. Außerdem ist es für die Berechnungen vorteilhaft, geometrisch einfache Gefahrenstellen 26a-b wie Quader oder Kugeln zu definieren, wofür dann gewisse Leerräume in Kauf genommen werden. Mehrere Gefahrenstellen 26a-b umgeben mehrere Maschinen 26 und/oder mehrere bewegliche Teilabschnitte einer Maschine 26. Gefahrenstellen 26a-b können starr sein und sämtliche denkbaren Arbeitsbewegungen umfassen. Alternativ sind jeweils Gefahrenstellen 26a-b für Teilabschnitte der Arbeitsbewegung definiert, die in einer dem Prozess entsprechenden Abfolge benutzt werden und die kleiner und besser angepasst sind.

Die Steuer- und Auswertungseinheit 24 berechnet kontinuierlich den kürzesten Abstand des einer jeweiligen Gefahrenstelle 26a-b nächsten Objekts 28. In Figur 2 sind Pfeile eingezeichnet, welche in der aktuellen Situation der Figur 2 die beiden kürzesten Abstände bezüglich der beiden Gefahrenstellen 26a-b darstellen. Der kürzeste Abstand verbindet den nächsten Punkt einer Gefahrenstelle 26a-b mit dem nächsten Punkt des nächsten Objekts 28. Bei dieser Darstellung ist angenommen, dass das kleine Objekt 28 rechts unten die Mindestgröße überschreitet. Andernfalls würde es ignoriert und stattdessen der Abstand zu den beiden verschmolzenen Personen ausgegeben, die das zweitnächste Objekt 28 bilden.

Der jeweils zuletzt bezüglich einer Gefahrenstelle 26a-b ermittelte kürzeste Abstand wird zyklisch oder azyklisch an der sicheren Schnittstelle 29 bereitgestellt. Typische Ausgaberaten sind mehrmals pro Sekunde, es ist aber auch eine seltenere Aktualisierung denkbar, je nach geforderter und möglicher Ansprechzeit der Stereokamera 10. Eine an der sicheren Schnittstelle 29 angeschlossene übergeordnete Steuerung, insbesondere diejenige der Maschine 26, plant erforderlichenfalls abhängig von dem kürzesten Abstand den nächsten Arbeitsschritt neu, so dass durchgehend der erforderliche Sicherheitsabstand zwischen Mensch und Maschine gewahrt bleibt.

Vorzugsweise bestimmt die Steuer- und Auswertungseinheit 24 auch eine Geschwindigkeit des Objekts 28, zu dem der kürzeste Abstand gemessen wurde, und gibt sie mit dem kürzesten Abstand an die sichere Schnittstelle 29 aus. Damit lässt sich die Gefährdung noch besser differenzieren. Zwar ist in der Regel das nächste Objekt 28 das gefährlichste - oder genaugenommen das am meisten gefährdete. Außerdem kann der Sicherheitsabstand, den die Maschine 26 bei ihrer Bewegungsplanung einhält, auf eine Maximalgeschwindigkeit einer menschlichen Bewegung ausgelegt sein. Trotzdem wird die sicherheitsgerichtete Reaktion der Maschine auf ihre Umgebung am besten angepasst, wenn mehr Informationen über das nächste Objekt 28 und möglicherweise auch weitere Objekte 28 vorliegen. Auch eine Abhängigkeit von dem Eigenzustand und der geplanten Bewegung der Maschine 26, insbesondere Position und Geschwindigkeit von Maschinenteilen oder gar gefährlichen Werkzeugbereichen, ist denkbar, wobei solche Informationen vorzugsweise von der Maschinensteuerung zur Verfügung gestellt werden.

Es gibt eine Reihe von weiteren Messgrößen oder daraus abgeleiteten Größen, welche die Steuer- und Auswertungseinheit 24 zusätzlich zu dem kürzesten Abstand an die sichere
Schnittstelle 29 ausgeben kann, damit sie in die Sicherheitsbetrachtung der dort angeschlossenen Steuerung einfließen können. Die Geschwindigkeit des nächsten Objekts 28, zu dem der kürzeste Abstand gemessen ist, wurde schon diskutiert. Vorzugsweise werden zusätzliche kürzeste Abstände zu weiteren Objekten 28 oder separaten Objektabschnitten des nächsten Objekts 28 ausgegeben, beispielsweise eines anderen Armes. Ein mögliches Kriterium hier wäre, dass es im selben Objekt noch weitere lokale Abstandsminima gibt, denn die unmittelbaren Nachbarpunkte zum kürzesten Abstand sind uninteressant. Beispielsweise garantiert die Stereokamera 10 die Überwachung der fünf nächsten Abstände je aktiver Gefahrenstelle 26a-b. Ein sechstes Objekt und weitere Objekte beziehungsweise Objektabschnitte werden nicht mehr berücksichtigt, wobei aber noch eine Zusatzinformation denkbar ist, dass es mehr als fünf Objekte der Mindestgröße im Überwachungsbereich 12 gibt. Die angeschlossene Steuerung kann so auch für weitere zukünftige Gefahrensituationen mit anderen Objekten 28 als dem nächsten Objekt 28 vorplanen. Ein plastisches Beispiel ist ein noch etwas ferneres Objekt 28, das sich einer Gefahrenstelle 26a-b mit großer Geschwindigkeit nähert.

Nicht abschließend sind weitere denkbare Zusatzinformationen die Größe des nächsten Objekts 28, dessen Position in Form eines Schwerpunktes oder des nächsten Punktes, eine Bewegungsrichtung, eine Objekthülle eines das Objekt 28 umgebenden Hüllkörpers oder eine Repräsentation des Objekts 28 insgesamt als Objektwolke, 3D-Punktewolke oder 3D-Voxel-Darstellung.

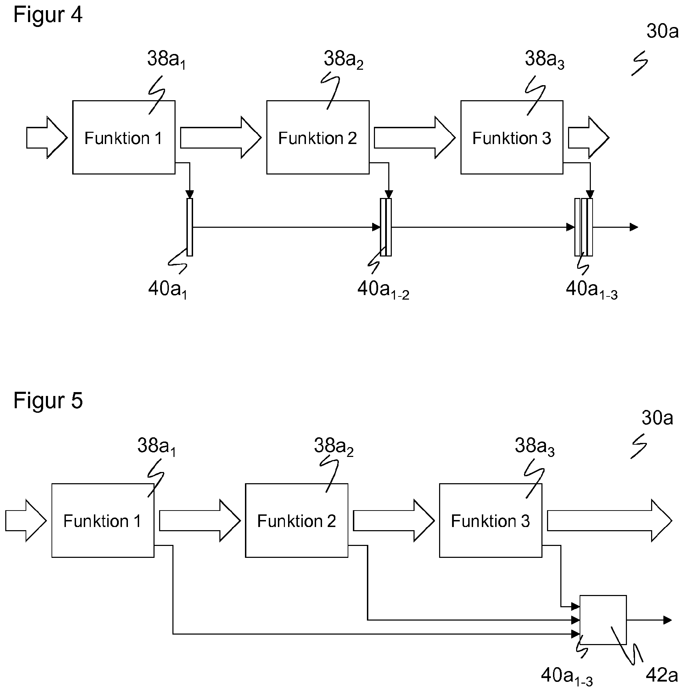

Figur 3 zeigt eine schematische Darstellung der Steuer- und Auswertungseinheit 24 in einer Ausführungsform mit zwei Verarbeitungskanälen 30a-b. Die eigentlichen Messdaten der Stereokamera 10 und damit die Eingangsgröße sind die Rohbilder der beiden Kameramodule 14a-b. Jeder Verarbeitungskanal 30a-b weist mehrere Verarbeitungsstufen auf. Figur 3 zeigt aber nicht die eigentlichen Verarbeitungsstufen, die erst in Figur 4 eingeführt werden, sondern die Hardwarestruktur mit jeweils zwei hintereinander geschalteten Bausteinen, etwa je einem FPGA 32a-b und einem Multi-Core-Prozessor 34a-b. Es kann abweichend nur einen solchen Baustein oder mehr Bausteine geben, und auf jedem Baustein können eine oder mehrere Verarbeitungsstufen implementiert sein. Die Kommunikation nach außen erfolgt über einen Kommunikationsprozessor 36, der hier nicht redundant vorgesehen ist und dessen Absicherung nicht weiter diskutiert wird, weil sie nicht mehr Teil der eigentlichen Auswertung ist.

Die Bildsensoren 16a-b der beiden Kameramodule 14a-b liefern mit einer Bildwiederholrate von beispielsweise fünfzig Bildern pro Sekunde zwei Bilder mit einer Auflösung, die üblicherweise in der Größenordnung von Megapixeln liegt. Diese Bilder werden zu Tiefenkarten verrechnet, aus denen dann Detektions- und andere Kennwertkarten erzeugt werden. Das ohnehin hohe Datenvolumen erhöht sich somit in den ersten Verarbeitungsschritten sogar noch weiter. Ein vollständiger Vergleich der Verarbeitungsergebnisse zwischen den Verarbeitungskanälen 30a-b auf den einzelnen Verarbeitungsstufen wäre daher ausgesprochen aufwändig. Es muss aber eine fehlerfreie beziehungsweise fehlererkennende Verarbeitung garantiert und notfalls eine sicherheitsgerichtete Reaktion ausgelöst werden. Daher werden erfindungsgemäß nur Signaturen verglichen, die sogleich unter Bezugnahme auf die Figur 4 eingeführt werden.

Noch aus Figur 3 soll aber ein weiterer vorteilhafter Aspekt der Erfindung erläutert werden. In der zweikanaligen Auswertungseinheit 24 sind zwei Arten von Kommunikation erforderlich, nämlich innerhalb der Verarbeitungskanäle 30a-b zur Weitergabe von Daten zwischen den Verarbeitungsstufen auch über Bauteile 32a-b, 34a-b hinweg, und auch zwischen den Verarbeitungskanälen 30a-b zum Vergleich von Verarbeitungsergebnissen beziehungsweise Signaturen. Vorzugsweise erfolgt diese Kommunikation über unsichere Kommunikationswege, insbesondere Black Channels, und die Kommunikationswege sind in Figur 3 durch entsprechende mit BC markierte Pfeile eingezeichnet. Black Channels wurden einleitend eingeführt, die Kommunikation ist demnach kosten- und hardwareeffiezient ohne sichere Technik realisiert, und die Sicherung der Daten erfolgt über Signaturen und Funktionsüberwachung.

Figur 4 zeigt beispielhaft nur einen der Verarbeitungskanäle 30a, um die mehrstufige Struktur nun auf Ebene von Verarbeitungsstufen 38a₁₋₃ zu illustrieren. Die Verarbeitungsstufen 38a₁₋₃ können auf mehreren Bauteilen implementiert sein, wie dies zu Figur 3 beschrieben wurde. Die Verarbeitungsstufen 38a₁₋₃, deren gezeigte Anzahl drei natürlich rein beispielhaft ist, können im Prinzip beliebige Auswertungen der Messdaten vornehmen.

Als konkretes Beispiel soll stellvertretend noch einmal auf die Stereokamera 10 mit Abstandsüberwachung gemäß den Figuren 1 und 2 zurückgegriffen und eine denkbare Verarbeitungspipeline dafür beschrieben werden. Eine Stereokamera 10 könnte auch anders ausgewertet werden, und die erfindungsgemäße Mehrkanalstruktur eignet sich auch für andere Detektionsprinzipien und Sensoren.

Die Kameramodule 14a-b der Stereokamera 10 erzeugen zunächst Rohbilder. Diese werden in einer ersten Verarbeitungsstufe vorverarbeitet, um kleinere Störstellen, Helligkeitsunterschiede und ähnliches auszugleichen oder eine Geometriekorrektur vorzunehmen. Dann wird in einer weiteren Verarbeitungsstufe aus den Rohbildern mittels eines Stereoalgorithmus' eine Tiefenkarte erzeugt. In der Tiefenkarte werden dann relevante Objekte erfasst. Das kann in sich mehrere Verarbeitungsstufen verlangen, etwa um Gefahrenstellen 26a-b auszumaskieren, die selbst nicht überwacht werden, um Hintergrundobjekte auszuschließen oder um kleine Störobjekte und Fehlstellen, in denen keine Tiefenwerte erfassbar sind, zu ignorieren. Auch an die erfassten Objekte können noch Bedingungen gestellt werden, wie eine Mindestgröße oder die Übereinstimmung mit einem Körpermodell. In einer weiteren Verarbeitungsstufe wird dann für jede Gefahrenstelle 26a-b der kürzeste Abstand zum nächsten Objekt 28 bestimmt. Dies kann die gesuchte Ausgabegröße für die sichere Schnittstelle 29 und damit die letzte Verarbeitungsstufe sein. Alternativ stellt die Bewertung der kürzesten Abstände eine weitere Verarbeitungsstufe dar, die in einer sicherheitsgerichteten Reaktion oder einer ungehinderten Fortsetzung der Arbeitsschritte der Maschine 26 mündet.

Nach diesem konkreten Beispiel werden die Verarbeitungsstufen 38a₁₋₃ von nun an abstrakt betrachtet. Das jeweilige Verarbeitungsergebnis einer Verarbeitungsstufe 38a₁₋₃ wird einerseits an die nächste Verarbeitungsstufe weitergereicht. Außerdem wird aus den Verarbeitungsergebnissen eine Signatur 40a₁₋₃ bestimmt, die dazu dient, Fehler in den Verarbeitungskanälen 30a-b aufzudecken.

Diese Signatur 40a₁₋₃ zur Repräsentation der Information der Verarbeitungsergebnisse kann ein Hashwert einer vorher festgelegten Hashfunktion der zu vergleichenden Daten sein. Außerdem können aggregierte Zwischenwerte der Datenverarbeitung als Teil der Signatur 40a₁₋₃ dienen, etwa ein Hashwert für ein detektiertes Objekt 28 mit Merkmalen wie dessen Größe und Position. Schließlich sind auch Ergebnisse interner Tests denkbar, die später gegen eine Erwartungshaltung verglichen werden, wobei entweder die Testergebnisse selbst oder eine Signatur darüber als Teil der Signaturen 40a₁₋₃ abgelegt werden.

Die Signaturen 40a₁₋₃ aggregieren relevante Informationen in sehr kleinen Datenblöcken und ermöglichen so einen effizienten Vergleich der Daten zwischen den beiden redundanten Verarbeitungskanälen 30a-b. Vorzugsweise wird die Signatur 40a₁₋₃ über sämtliche jeweils erzeugten Daten der Verarbeitungsergebnisse der Verarbeitungsstufe 38a₁₋₃ erzeugt, so dass sich eine Veränderung irgendwo in den Daten in einer Änderung der Signatur 40a₁₋₃ niederschlägt. Eine vorteilhafte Hashfunktion zur Bestimmung von Signaturen ist ein CRC-Verfahren (Cyclic Redundancy Check, zyklische Redundanzprüfung). Dies kann effizient berechnet werden und weist alle geforderten Eigenschaften auf.

Die Signaturen 40a₁₋₃ können wie in Figur 4 dargestellt im Datenfluss zur nächsten Verarbeitungsstufe 38a₁₋₃ weitergereicht werden und dabei anwachsen. Jede Verarbeitungsstufe 38a₁₋₃ fügt dabei ihre Signatur 40a₁₋₃ hinzu.

Figur 5 zeigt eine Alternative, bei der die Signaturen 40a₁₋₃ zentral in einem Signaturspeicher 42a gesammelt werden. Sie werden dann am Ende der letzten Verarbeitungsstufe 38a₃ gemeinsam übertragen. Es sind Mischformen denkbar, bei denen Signaturen 40a₁₋₃ teilweise wie in Figur 4 weitergereicht und in mindestens einer Verarbeitungsstufe 38a₁₋₃ zentral in einem Signaturspeicher 42a abgelegt werden wie in Figur 5.

In all diesen Fällen erleichtert das Vorgehen die Fehleridentifikation, da die Abweichungen der Signaturen in den Verarbeitungskanälen an einer bestimmten fehlerhaften Verarbeitungsstufe 38a₁₋₃ beginnen. Es ist abweichend von den Darstellungen der Figuren 4 und 5 auch denkbar, keine einzelnen Signaturen 40a₁₋₃ zu behalten, d. h. weder anwachsend noch zentral gespeichert. Stattdessen erzeugt jede Verarbeitungsstufe 38a₁₋₃ jeweils eine Signatur, in die neben den Verarbeitungsergebnissen der eigenen Verarbeitungsstufe 38a₁₋₃ auch die Signatur der vorangehenden Verarbeitungsstufe 38a₁₋₃ eingeht. Eine solche Signatur repräsentiert also als eine Art geschachtelte Metasignatur auch die bisherigen Signaturen. So muss am Ende nur eine einzige Signatur verglichen werden, allerdings um den Preis, dass ein Fehler nur noch aufgedeckt wird, nicht aber einer bestimmten Verarbeitungsstufe 38a₁₋₃ zugeordnet werden kann.

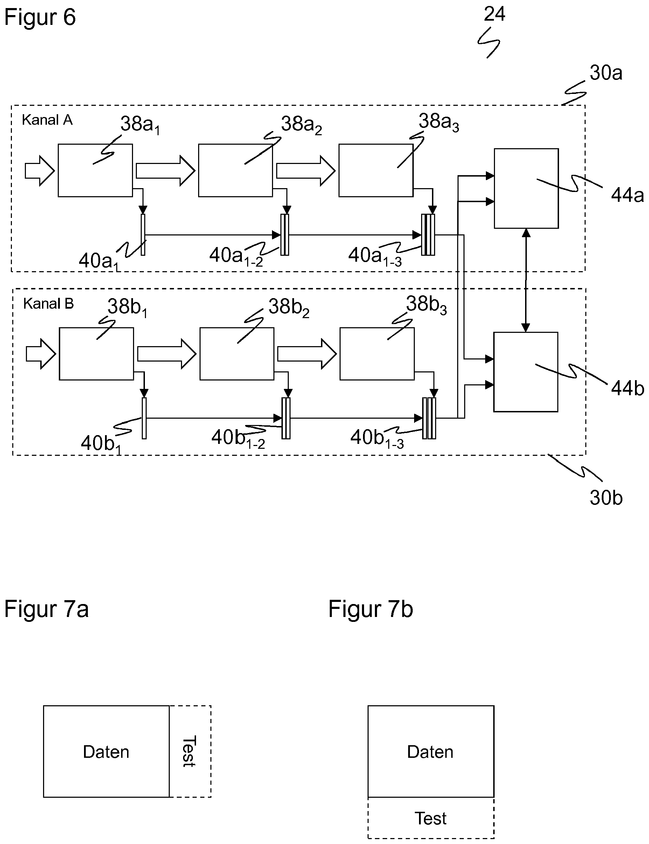

Figur 6 zeigt nochmals schematisch eine Ausführungsform einer sicheren zweikanaligen Steuer- und Auswertungseinheit 24, wobei die beiden Verarbeitungskanäle 30a-b auf einer funktionellen Ebene mit Verarbeitungsstufen 38a-b₁₋₃ wie in Figur 4 gezeigt sind, nicht wie in Figur 3 als Hardwarestruktur. Weiterhin ist die Anzahl der Verarbeitungsstufen 38a-b₁₋₃ rein beispielhaft, und für die einzelnen Verarbeitungskanäle 30a-b könnte alternativ auch die Struktur gemäß Figur 5 gewählt werden.

Wie in Figur 6 und auch schon in Figur 2 zu erkennen, werden vorzugsweise nur die letzten aggregierten Signaturen 40a-b₁₋₃ der letzten Verarbeitungsstufen 38a-b₃ verglichen. Ein Zwischenvergleich bei anderen Verarbeitungsstufen 38a-b₁₋₂ wäre grundsätzlich denkbar, bedeutet aber einen Zusatzaufwand, der gar nicht erforderlich ist, weil auch der Vergleich am Schluss den Fehler lokalisieren kann.

Die mit dem Datenfluss mitgeführte Signaturen 40a-b₁₋₃, oder alternativ die zentral gesammelten Signaturen 40a-b₁₋₃, werden am Ende der Verarbeitungskette kreuzweise in einer jeweiligen Vergleichseinheit 44a-b der Verarbeitungskanäle 30a-b verglichen. Dadurch ist die Querkommunikation und der Vergleichsaufwand sogar zweimal erheblich verringert, nämlich zum einen weil nur Signaturen 40a-b₁₋₃ verglichen werden und dies zum anderen nur einmal an einer zentralen Stelle. Diese Herangehensweise hat auch den Vorteil, dass innerhalb der Verarbeitungskette nicht mehr benötigte Daten gelöscht werden können, da die benötigte Information für den Vergleich in den Signaturen 40a-b₁₋₃ gespeichert ist.

Die Figur 6 ist insofern vereinfacht, als die Weitergabe der Verarbeitungsergebnisse der letzten Verarbeitungsstufe 38a-b₁₋₃ nicht dargestellt ist. Es wäre also gedanklich ein Pfeil von der letzten Verarbeitungsstufe 38a-b₁₋₃ zu dem Kommunikationsprozessor 36 zu ergänzen. Dazu können im Übrigen Daten aus einem beliebigen der beiden Verarbeitungskanäle 30a-b genutzt werden, von denen eigens nachgewiesen wurde, dass sie übereinstimmen.

Zusätzlich zu der Bestimmung von Signaturen 40a-b₁₋₃ für die jeweiligen Verarbeitungsergebnisse der Verarbeitungsstufen 38a-b₁₋₃ sind auch Funktionstests mit spezifischen Stimulationen vorstellbar, um bestimmte Aspekte der Verarbeitung gezielt zu überprüfen. Solche Testdaten können wie in Figur 7a die Datenzeilen verlängern, oder es werden wie in Figur 7b zusätzliche Testzeilen an die Datenzeilen angehängt. Alternativ können auch ganze Testdatensätze in Lücken zwischen den funktionalen Datensätzen eingefügt werden. Das beansprucht dann eigene Testzeitfenster, hat aber den Vorteil, dass die Testabdeckung erhöht werden kann. Beispielsweise können hohe und schmale beziehungsweise niedrige und breite Bilder appliziert werden, die gemeinsam in der Summe die Verarbeitung über die gesamte Bildausdehnung effizient und effektiv testen.

Die Verarbeitungsergebnisse von Testdaten können vorzugsweise ebenfalls in die Signatur 40a-b₁₋₃ der Verarbeitungsstufe 38a-b₁₋₃ eingehen oder alternativ innerhalb der Verarbeitungsstufe 38a-b₁₋₃ gegen die Erwartungshaltung verglichen werden. Ein zentraler Vergleich am Ende der Verarbeitungskanäle 30a-b ist bevorzugt, da dies den geringsten Zusatzaufwand erfordert. Es müssen so keine lokale Vergleichseinheiten vorgesehen sein, und die Vergleichseinheit 44a-b am Ende der Verarbeitungskanäle 30a-b ist ohnehin für Signaturvergleiche ausgelegt und erforderlichenfalls selbst durch Funktionstests abgesichert.

Wie an verschiedenen Ausführungsbeispielen erläutert, ist ein Aspekt der Erfindung das Ausnutzen von Signaturen 40a-b₁₋₃ für eine ressourcenschonende Fehleraufdeckung. Ein vorteilhafter ergänzender Aspekt ist es, den Vergleich nur einmal in einer zentralen Vergleichseinheit 44a-b am Ende der Verarbeitungskanäle 30a-b vorzunehmen. Als weiterer vorteilhafter Aspekt erfolgt die Kommunikation sowohl innerhalb der Verarbeitungskanäle 30a-b als auch zwischen Verarbeitungskanälen 30a-b ungesichert, insbesondere mittels Black Channels. Das Sicherheitsprotokoll erreicht eine Sicherung gegen Übertragungsfehler wie Wiederholung, Verlust, Einfügung, fehlerhafte Reihenfolge, Verzögerung oder fehlerhafte Datenübertragung. Die Datenintegrität wird beispielsweise über laufende Nummern der Datenpakete, eine Zeitüberwachung und Daten-CRCs gesichert. Im Fehlerfall können die soeben genannten Übertragungsfehler erkannt werden. Durch den zusätzlichen Einsatz einer fehlerkorrigierenden Kodierung der durch einen Black Channel gesicherten Übertragung im Standardkanal können außerdem fehlerhafte Datenpakete korrigiert werden, wodurch die Systemverfügbarkeit erhöht wird.

Die Erfindung wurde an Ausführungsformen mit zwei Verarbeitungskanälen 30a-b beschrieben. Es ist auch eine mehrkanalige Struktur mit mindestens einem zusätzlichen Verarbeitungskanal denkbar, der dann in sich so aufgebaut ist wie einer der beiden Verarbeitungskanäle 30a-b. An die Stelle eines einfachen Vergleichs mit Annahme eines Fehlers bei Nichtübereinstimmung tritt dann vorzugsweise eine Mehrheitsentscheidung (Voting), wobei die geforderte Mehrheit ein Mittel ist, um Sicherheitsniveau und Verfügbarkeit gegeneinander abzuwägen. Wird beispielsweise einstimmiges Voting gefordert, so erhöht der zusätzliche Verarbeitungskanal nur die Sicherheit, während die Wahrscheinlichkeit auf Kosten der Verfügbarkeit ansteigt, dass in einem Verarbeitungskanal ein Fehler auftritt. Eine 2:1-Mehrheit, die bei höherer Verfügbarkeit eine Abweichung in einem Verarbeitungskanal toleriert, darf immer noch als sehr sicher angesehen werden, weil es extrem unwahrscheinlich ist, dass in zwei Verarbeitungskanälen zur selben Zeit derselbe Fehler auftritt.

Alternativ zu einem Vergleich von Signaturen 40a-b₁₋₃ wäre auch ein direkter Vergleich der Daten oder bestimmter höherwertiger Merkmale wie erfassten Objekten oder Prüfentscheidungen möglich. Damit wird dann auch eine sichere Auswertung möglich, aber die erfindungsgemäßen Vorteile einfacher, ressourcenschonende Vergleiche gehen verloren. Vorstellbar ist weiterhin, nicht alle Daten zu vergleichen, sondern das Datenvolumen durch Weglassen eines Teils der Daten zu erreichen. Das zieht aber eine geringere Fehleraufdeckung nach sich und ist somit für die funktionale Sicherheit des Systems nachteilig.

## Patentansprüche

1. Optoelektronischer Sensor (10) zur Erfassung von Objekten (28) in einem Überwachungsbereich (12) mit mindestens einem Lichtempfänger (16a-b) zur Erzeugung von Messdaten aus Empfangslicht aus dem Überwachungsbereich (12) sowie mit einer sicheren Auswertungseinheit (24), die mindestens zwei Verarbeitungskanäle (30a-b) zur redundanten Verarbeitung der Messdaten und einer Vergleichseinheit (44a-b) zum Vergleichen von Verarbeitungsergebnissen der Verarbeitungskanäle (30a-b) aufweist, um Fehler in einem Verarbeitungskanal (30a-b) aufzudecken,
**dadurch gekennzeichnet,**
**dass** die Verarbeitungskanäle (30a-b) jeweils für eine Bestimmung einer Signatur (40a-b_{1..3}) zu ihren Verarbeitungsergebnissen und die Vergleichseinheit (44a-b) für einen Vergleich der Signaturen (40a-b_{1..3}) ausgebildet ist.

2. Sensor (10) nach Anspruch 1,
wobei der Sensor (10) eine Kamera mit mindestens einem Bildsensor (16a-b) als Lichtempfänger ist, der Bilddaten als Messdaten erzeugt, insbesondere eine Stereokamera, bei der die Verarbeitungskanäle (30a-b) zumindest einige der folgenden Verarbeitungsstufen(38a-b₁₋₃) aufweisen: Auslesen von Rohbildern, Vorverarbeitung von Rohbildern, Erzeugung einer Tiefenkarte durch einen Stereoskopiealgorithmus, Erzeugung einer Detektionskarte mit relevanten erfassten Objekten (28), Bestimmen kürzester Abstände der relevanten Objekte (28) zu Gefahrenstellen (26a-b) und Ableiten einer sicherheitsgerichteten Reaktion aus den kürzesten Abständen.

3. Sensor (10) nach Anspruch 1 oder 2,
wobei die Signatur (40a-b_{1..3}) einen aus den Verarbeitungsergebnissen berechneten Hashwert aufweist, wobei insbesondere als Hashfunktion eine zyklische Redundanzprüfung verwendet ist.

4. Sensor (10) nach einem der vorhergehenden Ansprüche,
wobei die Verarbeitungskanäle (30a-b) jeweils mehrere Verarbeitungsstufen (38a-b₁₋₃) aufweisen und dafür ausgebildet sind, in mehreren, insbesondere allen Verarbeitungsstufen (38a-b₁₋₃) eine Signatur (40a-b_{1..3}) für die Verarbeitungsergebnisse dieser Verarbeitungsstufe (38a-b₁₋₃) zu bestimmen.

5. Sensor nach Anspruch 4,
wobei Verarbeitungskanäle (30a-b) dafür ausgebildet sind, Signaturen (40a-b_{1..3}) aus verschiedenen Verarbeitungsstufen (38a-b₁₋₃) zu sammeln, insbesondere indem Signaturen (40a-b_{1..3}) jeweils an die nächste Verarbeitungsstufe (38a-b₁₋₃) weitergegeben werden und/oder die Verarbeitungskanäle (30a-b) einen Signaturspeicher (42a-b) aufweisen, in dem die Verarbeitungsstufen (38a-b₁₋₃) ihre jeweiligen Signaturen (40a-b_{1..3}) ablegen.

6. Sensor (10) nach Anspruch 4 oder 5,
wobei die Verarbeitungskanäle (30a-b) dafür ausgebildet sind, in mindestens einer Verarbeitungsstufe (38a-b₁₋₃) die Signatur (40a-b_{1..3}) über die Verarbeitungsergebnisse der Verarbeitungsstufe (38a-b₁₋₃) und eine Signatur (40a-b_{1..3}) aus einer vorangegangenen Verarbeitungsstufe (38a-b₁₋₃) zu bestimmen.

7. Sensor (10) nach einem der Ansprüche 4 bis 6,
wobei die Verarbeitungskanäle (30a-b) Verarbeitungsstufen (38a-b₁₋₃) auf verschiedenen Bauteilen (32a-b, 34a-b) aufweisen.

8. Sensor (10) nach einem der Ansprüche 4 bis 7,
wobei die Verarbeitungskanäle (30a-b) dafür ausgebildet sind, Verarbeitungsergebnisse und/oder Signaturen (40a-b_{1..3}) zwischen den Verarbeitungsstufen (38a-b₁₋₃) über eine nicht sichere Kommunikationsverbindung (BC) weiterzugeben.

9. Sensor (10) nach einem der Ansprüche 4 bis 8,
wobei die Vergleichseinheit (44a-b) dafür ausgebildet ist, nur am Ende der Verarbeitungskanäle Signaturen (40a-b_{1..3}) zu vergleichen.

10. Sensor (10) nach einem der vorhergehenden Ansprüche,
wobei die Auswertungseinheit (24) dafür ausgebildet ist, Signaturen (40a-b_{1..3}) über eine nicht sichere Kommunikationsverbindung (BC) an die Vergleichseinheit (44a-b) weiterzugeben.

11. Sensor (10) nach einem der vorhergehenden Ansprüche,
wobei die Verarbeitungskanäle (30a-b) dafür ausgebildet sind, Testdaten in die Messdaten oder Verarbeitungsergebnisse einzuschleusen und insbesondere die Signatur(40a-b_{1..3}) auch über Verarbeitungsergebnisse der Testdaten zu bestimmen.

12. Sensor (10) nach einem der vorhergehenden Ansprüche,
wobei die Verarbeitungskanäle (30a-b) dafür ausgebildet sind, Daten und/oder Signaturen (40a-b_{1..3}) mit einer Fehlerkorrekturmöglichkeit für die Übertragung zu versehen.

13. Sensor (10) nach einem der vorhergehenden Ansprüche,
wobei die Verarbeitungskanäle (30a-b) dafür ausgebildet sind, nicht mehr benötigte Teile der Verarbeitungsergebnisse zu löschen.

14. Sensor (10) nach einem der vorhergehenden Ansprüche,
wobei die Auswertungseinheit (24) mehr als zwei Verarbeitungskanäle (30a-b) aufweist und die Vergleichseinheit (44a-b) für ein Voting-Verfahren zum Bewerten von Signaturen (40a-b_{1..3}) ausgebildet ist.

15. Verfahren zum sicheren Auswerten von Messdaten eines optoelektronischen Sensors (10), wobei die Messdaten in mindestens zwei Verarbeitungskanälen (30a-b) redundant verarbeitet und die Verarbeitungsergebnisse der Verarbeitungskanäle (30a-b) verglichen werden, um Fehler aufzudecken,
**dadurch gekennzeichnet,**
**dass** in den Verarbeitungskanälen (30a-b) jeweils eine Signatur (40a-b_{1..3}) ihrer Verarbeitungsergebnisse bestimmt und nur die Signaturen (40a-b_{1..3}) verglichen werden.

## Geänderte Patentansprüche

### Geänderte Patentansprüche gemäss Regel 137(2) EPÜ.

1. Optoelektronischer Sensor (10) zur Erfassung von Objekten (28) in einem Überwachungsbereich (12) mit mindestens einem Lichtempfänger (16a-b) zur Erzeugung von Messdaten aus Empfangslicht aus dem Überwachungsbereich (12) sowie mit einer sicheren Auswertungseinheit (24), die mindestens zwei Verarbeitungskanäle (30a-b) zur redundanten Verarbeitung der Messdaten und einer Vergleichseinheit (44a-b) zum Vergleichen von Verarbeitungsergebnissen der Verarbeitungskanäle (30a-b) aufweist, um Fehler in einem Verarbeitungskanal (30a-b) aufzudecken,
**dadurch gekennzeichnet,**
**dass** die Verarbeitungskanäle (30a-b) jeweils für eine Bestimmung einer Signatur (40a-b_{1..3}) zu ihren sicherheitsrelevanten Verarbeitungsergebnissen und die Vergleichseinheit (44a-b) für einen Vergleich der Signaturen (40a-b_{1..3}) ausgebildet ist, wobei sich eine andere Signatur ergibt, wenn sich die sicherheitsrelevanten Verarbeitungsergebnisse an irgendeiner Stelle unterscheiden, so dass nicht die gesamten Daten der Verarbeitungsergebnisse verglichen werden müssen.

2. Sensor (10) nach Anspruch 1,
wobei der Sensor (10) eine Kamera mit mindestens einem Bildsensor (16a-b) als Lichtempfänger ist, der Bilddaten als Messdaten erzeugt, insbesondere eine Stereokamera, bei der die Verarbeitungskanäle (30a-b) zumindest einige der folgenden Verarbeitungsstufen(38a-b₁₋₃) aufweisen: Auslesen von Rohbildern, Vorverarbeitung von Rohbildern, Erzeugung einer Tiefenkarte durch einen Stereoskopiealgorithmus, Erzeugung einer Detektionskarte mit relevanten erfassten Objekten (28), Bestimmen kürzester Abstände der relevanten Objekte (28) zu Gefahrenstellen (26a-b) und Ableiten einer sicherheitsgerichteten Reaktion aus den kürzesten Abständen.

3. Sensor (10) nach Anspruch 1 oder 2,
wobei die Signatur (40a-b_{1..3}) einen aus den Verarbeitungsergebnissen berechneten Hashwert aufweist, wobei insbesondere als Hashfunktion eine zyklische Redundanzprüfung verwendet ist.

4. Sensor (10) nach einem der vorhergehenden Ansprüche,
wobei die Verarbeitungskanäle (30a-b) jeweils mehrere Verarbeitungsstufen (38a-b₁₋₃) aufweisen und dafür ausgebildet sind, in mehreren, insbesondere allen Verarbeitungsstufen (38a-b₁₋₃) eine Signatur (40a-b_{1..3}) für die Verarbeitungsergebnisse dieser Verarbeitungsstufe (38a-b₁₋₃) zu bestimmen.

5. Sensor nach Anspruch 4,
wobei Verarbeitungskanäle (30a-b) dafür ausgebildet sind, Signaturen (40a-b_{1..3}) aus verschiedenen Verarbeitungsstufen (38a-b₁₋₃) zu sammeln, insbesondere indem Signaturen (40a-b_{1..3}) jeweils an die nächste Verarbeitungsstufe (38a-b₁₋₃) weitergegeben werden und/oder die Verarbeitungskanäle (30a-b) einen Signaturspeicher (42a-b) aufweisen, in dem die Verarbeitungsstufen (38a-b₁₋₃) ihre jeweiligen Signaturen (40a-b_{1..3}) ablegen.

6. Sensor (10) nach Anspruch 4 oder 5,
wobei die Verarbeitungskanäle (30a-b) dafür ausgebildet sind, in mindestens einer Verarbeitungsstufe (38a-b₁₋₃) die Signatur (40a-b_{1..3}) über die Verarbeitungsergebnisse der Verarbeitungsstufe (38a-b₁₋₃) und eine Signatur (40a-b_{1..3}) aus einer vorangegangenen Verarbeitungsstufe (38a-b₁₋₃) zu bestimmen.

7. Sensor (10) nach einem der Ansprüche 4 bis 6,
wobei die Verarbeitungskanäle (30a-b) Verarbeitungsstufen (38a-b₁₋₃) auf verschiedenen Bauteilen (32a-b, 34a-b) aufweisen.

8. Sensor (10) nach einem der Ansprüche 4 bis 7,
wobei die Verarbeitungskanäle (30a-b) dafür ausgebildet sind, Verarbeitungsergebnisse und/oder Signaturen (40a-b_{1..3}) zwischen den Verarbeitungsstufen (38a-b₁₋₃) über eine nicht sichere Kommunikationsverbindung (BC) weiterzugeben.

9. Sensor (10) nach einem der Ansprüche 4 bis 8,
wobei die Vergleichseinheit (44a-b) dafür ausgebildet ist, nur am Ende der Verarbeitungskanäle Signaturen (40a-b_{1..3}) zu vergleichen.

10. Sensor (10) nach einem der vorhergehenden Ansprüche,
wobei die Auswertungseinheit (24) dafür ausgebildet ist, Signaturen (40a-b_{1..3}) über eine nicht sichere Kommunikationsverbindung (BC) an die Vergleichseinheit (44a-b) weiterzugeben.

11. Sensor (10) nach einem der vorhergehenden Ansprüche,
wobei die Verarbeitungskanäle (30a-b) dafür ausgebildet sind, Testdaten in die Messdaten oder Verarbeitungsergebnisse einzuschleusen und insbesondere die Signatur(40a-b_{1..3}) auch über Verarbeitungsergebnisse der Testdaten zu bestimmen.

12. Sensor (10) nach einem der vorhergehenden Ansprüche,
wobei die Verarbeitungskanäle (30a-b) dafür ausgebildet sind, Daten und/oder Signaturen (40a-b_{1..3}) mit einer Fehlerkorrekturmöglichkeit für die Übertragung zu versehen.

13. Sensor (10) nach einem der vorhergehenden Ansprüche,
wobei die Verarbeitungskanäle (30a-b) dafür ausgebildet sind, nicht mehr benötigte Teile der Verarbeitungsergebnisse zu löschen.

14. Sensor (10) nach einem der vorhergehenden Ansprüche,
wobei die Auswertungseinheit (24) mehr als zwei Verarbeitungskanäle (30a-b) aufweist und die Vergleichseinheit (44a-b) für ein Voting-Verfahren zum Bewerten von Signaturen (40a-b_{1..3}) ausgebildet ist.

15. Verfahren zum sicheren Auswerten von Messdaten eines optoelektronischen Sensors (10), wobei die Messdaten in mindestens zwei Verarbeitungskanälen (30a-b) redundant verarbeitet und die Verarbeitungsergebnisse der Verarbeitungskanäle (30a-b) verglichen werden, um Fehler aufzudecken,
**dadurch gekennzeichnet,**
**dass** in den Verarbeitungskanälen (30a-b) jeweils eine Signatur (40a-b_{1..3}) ihrer sicherheitsrelevanten Verarbeitungsergebnisse bestimmt und nur die Signaturen (40a-b_{1..3}) verglichen werden, wobei sich eine andere Signatur ergibt, wenn sich die sicherheitsrelevanten Verarbeitungsergebnisse an irgendeiner Stelle unterscheiden, so dass nicht die gesamten Daten der Verarbeitungsergebnisse verglichen werden müssen.
